# EUROPEAN PATENT APPLICATION

(11) **EP 2 048 110 A1**
(43) Date of publication of application: **15.04.2009**
(21) Application number: 07745131.8
(22) Date of filing: 05.06.2007
(51) Int. Cl.: C01B 3/08, H01M 10/44

(54) **POWER GENERATING APPARATUS**

(30) Priority: 31.07.2006 JP 2006209157; 27.04.2007 JP 2007142528
(71) Applicant: TECHNO BANK CO., LTD., Shinjuku-ku Tokyo 169-0074 (JP); TSUJI, Nobuyoshi, Shinjuku-ku Tokyo 169-0074 (JP)
(72) Inventor: TSUJI, Nobuyoshi, Shinjuku-ku Tokyo 1690074 (JP)
(74) Representative: ABG Patentes, S.L.
(86) International application number: PCT/JP2007/061844
(87) International publication number: WO 2008/015844

(57) **Abstract**

This invention relates to a power generating apparatus including two systems. In one of the systems, a hydrogen gas is generated by hydrolysis, and a hydrogen demanding unit generates electric power. In the other system, electric power is generated based on an oxidation-reduction chemical reaction of an electrode and ions.

The power generating apparatus includes a hydrogen release unit with a hydrogen generating container within which a functional material has been mounted. Alternatively, a construction may be adopted in which the functional material is mounted on negative and positive electrodes and a battery element including the negative and positive electrodes and an electrolyte is provided within the container. The power generating apparatus further includes a hydrogen generating unit including a liquid container which generates a hydrogen gas both by hydrolysis, in which the functional material is reacted with water or an aqueous solution (an electrolysis solution), and by binding of hydrogen atoms which settle among crystals due to a quality change of the functional material by the hydrolysis, a first electrogenic unit in which the battery element in the hydrogen generating container generates electricity, a second electrogenic unit in which the hydrogen demanding unit generates electricity by a hydrogen gas produced in the hydrogen generating container, a control unit which applies electric power generated by the first electrogenic unit to a load device and, based on the load current amount, controls the amount of the hydrogen gas generated by the hydrogen generating unit.

## Description

### [FIELD OF INVENTION]

The present invention relates to a power generating apparatus including two systems one of which generates a hydrogen gas by hydrolysis and generates electric power by a hydrogen demanding unit and the other generates electric power by an oxidation-reduction chemical reaction involving electrodes and a plurality of ions.

### [BACKGROUND ART]

Power generating apparatuses have been proposed in which hydrogen is generated by heating a metal material or the like at a high temperature to hydrolyze water, or by reacting a dry solid hydride with steam, is supplied to a fuel cell or the like and is reacted with oxygen to generate current.

Such apparatuses are disclosed in the following documents. [Patent document 1] Japanese Patent Laid-Open No. 2004-149394 [Patent document 2] Japanese Patent Laid-Open No. 2002-069558 [Patent document 3] International Patent Publication W02003 /020635

The generation of hydrogen by heating a metal material at a high temperature is disadvantageous in that a large apparatus is necessary and heat damage occurs. The generation of hydrogen by reacting a dry solid hydride containing an acidic or alkaline material with steam suffers from a problem of a deterioration in devices such as solid polymer fuel cells by the acid or alkali and a serious problem that the generation of hydrogen occurs at a low humidity even during the stop of operation.

The generation of hydrogen by heating a metal material at a high temperature poses the following additional drawbacks. In this method, the reaction is carried out in an environment of 600°C or above. Accordingly, water supplied for hydrolysis per se is vigorously evaporated, and a large amount of water should be supplied resulting in low hydrogen generation efficiency. On the other hand, the generation of hydrogen by reacting a dry solid hydride containing an acidic or alkaline material with steam also has an additional drawback that the regeneration of the hydride is troublesome and, further, harmful substances are produced.

Further, in the conventional techniques, the control of the generated hydrogen gas is difficult, and any means for storing excess hydrogen gas is not provided. This may cause explosion due to the pressure of the generated excess gas. Accordingly, the conventional techniques are dangerous and unsuitable as a hydrogen supply source for industrially and commercially used hydrogen demanding units such as solid polymer fuel cells, hydrogen fueled engines, hydrogen welding/cutting systems, and semiconductor production apparatuses.

The problem with the control of hydrogen generation is particularly significant when apparatuses, particularly small mobile (cellular) telephones or automobiles, are used upside down, or when random hydrogen supply is required. The apparatuses contain water or a solution injected theretinto. Since the water or solution always stays on a gravity acting side, difficulties are experienced in releasing the generated hydrogen gas, in ensuring flow passages for the generated hydrogen gas, and in performing control to cope with a fluctuation in a consumed hydrogen amount.

The following document discloses a nickel(Ni)-hydrogen rechargeable battery in which a hydrogen storage alloy is mounted on a negative electrode and charge/discharge is performed by utilizing an ion oxidation-reduction chemical reaction of the alloy with a nickel compound in a positive electrode.
[Patent document 4] Japanese Patent Laid-Open Publication No. 2002-105564

### [DISCLOSURE OF INVENTION]

### [PROBLEMS TO BE SOLVED BY THE INVENTION]

In this hermetically sealed Ni-hydrogen rechargeable battery, when increasing the output is contemplated, the content of magnesium (Mg), which has the highest capability of storing hydrogen, in the hydrogen storage alloy is increased. Increasing the content of Mg, however, poses a problem that, as the content of Mg increases, a hydrolysis reaction with an electrolysis solution increases inversely, leading to problems of lowered durability and explosion of a battery by the pressure of the generated hydrogen gas.

Accordingly, an object of the present invention is to provide a technique which can solve the above problem of the prior art and, in use of a power generating apparatus as a power supply of small mobile (cellular) telephones, automobiles and the like, can satisfactorily supply electric power with a normal function even when the apparatus is used upside down or when random hydrogen supply is required. Another object of the present invention is to provide a technique which can realize a size reduction and a cost reduction even when the amount of hydrogen generated is increased and the function of the battery is improved. A further object of the present invention is to provide a technique which can convert electric energy from natural or regenerable energy to a substance (a functional material) using an easily available material, which is free from resource depletion and is environmentally friendly, contributing to safe and large quantity storage and transportation.

### [MEANS FOR SOLVING THE PROBLEMS]

According to the present invention, there is provided a power generating apparatus, including: a hydrogen releasing unit in a hydrogen generating container form including a functional material mounted within the container, or including a functional material mounted on a negative electrode and a positive electrode and a battery element formed of an electrolyte provided within the container; a hydrogen generating unit comprising a liquid container for generating a hydrogen gas both by hydrolysis through which the functional material is reacted with water or an aqueous solution (an electrolysis solution) and by binding of hydrogen atoms which settle among crystals due to a change in properties of the functional material by the hydrolysis; a first electrogenic unit for allowing the battery element in the hydrogen generating container to generate electricity; a second electrogenic unit for allowing a hydrogen demanding unit to generate electricity by utilizing the hydrogen gas generated in the hydrogen generating container; and a control unit for applying the electric power generated in the first electrogenic unit to a load device to control the amount of the hydrogen gas generated by the hydrogen generating unit according to the amount of current regulated by a load from the load device.

When the functional material is pulverized to a fine powder from the ultimate particle size naturally attainable in reduction of the particle size to 1 nm, the surface area of the functional material per unit mass is increased. This significantly accelerates an interfacial reaction per unit mass and develops unknown functionalities. The optimal particle size is in the range from 3 µm or less to 1 nm. In order to utilize this fine powder, various problems should be solved. Examples of such problems include easy mounting of the fine powder, prevention of scattering and poisoning, thermal and electric conductivity, and permeability of specific substances of the coating materials. The provision of a thin film of a plastic polymer resin or the like on the surface of the fine powder of the produced functional material can solve various problems. For example, when the functional material is a hydrogen storage alloy, direct contact of the surface of the hydrogen storage alloy with mainly oxygen and, further, carbon dioxide gas, nitrogen, moisture and the like in the atmosphere can be avoided. Accordingly, for example, poisoning and interfacial reactions can be prevented. Alternatively, the powder particles of the functional material are bound to one another to form a solid body or coarse particles which can enhance thermal and electric conductivity. Further, when film coating is performed using, as a film coating material, a water-soluble polymer resin which is a low temperature thermoplastic polymer resin of which the molecules are fluidized at a temperature of 70°C or below, for example, an aliphatic polyester resin, upon cracking of the film by shrinking and swelling of the functional material, the film can be self-repaired by low-temperature heat produced by the self-heat generation to prevent dropping of the fine powder and to maintain intimate contact and fixation.

Further, film coating by the conventional plating method or vacuum deposition method poses a problem of high production cost. On the other hand, water-soluble or organic solvent-soluble polymer resins can easily realize a thin film forming step using water or an organic solvent. In apparatuses operated in a relatively low temperature range, for example, emulsion type materials, for example, water-soluble organic polymer resins obtained by polymerizing lactic acid by chemical synthetic method, for example, aliphatic polyester resins or polyolefinic resins or the like dispersed in water can be used. Further, other conventional organic polymer resins can also be used. Specifically, when the functional material is mounted on the apparatus and a crack occurs on the surface of the film with the passage of operation time, the low-temperature thermoplasticity of the polymer resin can self-repair the crack of the film, for example, upon heat generation during the operation.

These functions can be applied as follows. When the functional material is a hydrogen storage alloy, various film coated granular functional materials and a binder may be mixed and solidified and the solidified material may be mounted by packing on the inner side or outer side side of a pipe within the apparatus. In this case, a method is preferably adopted in which the film coated particulate functional material is previously activated and is then mixed with a binder and pasted with an origanic solvent, and the paste is colidified followed by mounting on the inner side or outer side of the pipe within the apparatus. Alternatively, the paste may be bonded as a solid within grooves of a corrugated plate. In this case, post-activation is necessary. Therefore, large-size apparatuses are not required to be a robust container against pressure. This application can attain similar effects in hydrogen purification apparatuses for reformed gas and low purity hydrogen gas containing shapes of a pipe or a sheet for the purpose of purification of hydrogen, or in heat exchange apparatuses for the purpose of a heat pump, or in hydrogen compression apparatuses for the purpose of pressurization of hydrogen.

In addition, when the functional material with a plastic polymer resin used as a film coating material is mounted on the electrode foil of the batteries such as a nickel metal hydride battery or a lithium metal battery, doropping-out of the active material as a result of a particle size reduction of the active material due to swelling and shrinking caused by occlusion and release of hydrogen or lithium can be prevented. The function of a power generation element can be enhanced by joining a power generation element including a positive electrode, a negative electrode, and a separating film and covering an insulating film thereon for integration. In this case, the prolongation of the battery can be also realized.

With regard to the hydrogenation process of the functional material, coarse particles of the functional material such as a metal or an alloy are placed in a pressure container into which high pressure hydrogen is introduced and an electrically-heated wire, an electric heat plug, a laser emission plug or the like is selected and disposed in the temperature controlling unit, and an end part of the functional material is heated to a high temperature for ignition, whereby synthesis utilizing self-heat generation by a hydrogenation reaction can be realized. Accordingly, a fine powder of a hydride including metal crystals in the nanometer range can easily be obtained at low cost.

In laser beam irradiation, a metal can be reduced by a method in which a material such as a metal compound is heated at a high temperature to perform gasification followed by cooling. For example, when the object to be treated is magnesium oxide after use as a functional material, a method may be adopted in which a laser beam produced from regenerable energy such as natural energy is applied from a laser emission plug to heat and agsify magnesium oxide at a high temperature, oxygen is allowed to dissipate, and gas of magnesium is cooled, whereby fine particles of the metal can be produced by reduction.

The functional material produced by reduction and hydrogenation using natural or regenerable energy can be hermetically sealed and stored in a waterproofed container or bag. In other words, using electric energy generated by natural or regenerable energy, electric energy is converted to a high-density safe material, which can be stored and transported.

When the hydrogenated material is, for example, magnesium hydride, it can be filled in a hydrogen generating container, and water or an aqueous solution is introduced into the hydrogen generating container. As a result, a large amount of a hydrogen gas can be obtained from both of the hydrogen gas which magnesium generates by hydrolysis and the hydrogen gas which is generated by binding of two atoms of hydrogen to each other to generate a hydrogen molecule wherein the hydrogen atoms are those settling among magnesium crystals and released by the conversion of the reacted magnesium into magnesium hydroxide.

When this container is cast into bath water, rinse water, culture water and so on, a large amount of hydrogen gas generated by hydrolysis can be directly dissolved in water, and thus, it can be used as a production material of functional water to which a reduction potential and a weakly alkaline Ph value have been imparted.

In addition, the generated hydrogen gas, supplied to a hydrogen demanding unit, generates water by chemical combination of oxygen and hydrogen when the hydrogen demanding unit is a fuel cell or a hydrogen fueled engine. Since this generated water does not contain any acid or alkali, the water can be circulated directly into the hydrogen generating container again and raw material water for hydrolysis can be obtained without supplying water from the outside.

It has been conventionally known that although this hydrolysis reaction can be performed as a self-propelled reaction with water by using an aqueous solution of an acidic or alkaline material or by performing heating at or above 140°C under a high pressure environment, a reaction with water of room temperature cannot be continued but self-propelled reaction of hydrolysis can be performed in a normal pressure and temperature range using an aqueous solution (electrolysis solution) of a substance, generally bittern (magnesium chloride/MgCl), which naturally occurs and useful for the human body.

When this reaction is utilized for forming a battery element in a container, this reaction can generate electricity from self-discharge phenomenon by the short circuit of a local cell. The construction of a battery element is as follows. For example, a functional material magnesium (Mg) or magnesium hydride (MgH₂) is mounted on the active material of the negative electrode. An aqueous magnesium chloride (MgCl) solution (electrolysis solution) and a polymer solid electrolyte are used as the electrolyte. A functional material formed by mixing a metal such as Ni or Ti, an alloy, a powder of a metal compound, an active carbon powder or graphite and a catalyst with a fluorine resin is mounted on the diffusion layer in the positive electrode. Thus, a battery having a plural number of active materials such as oxygen and nickel hydroxide can be constructed. In this battery, even a plurality of ions containing polyvalent ions can be accepted by the diffusion layer with an increased unit area which can accelerated by an interfacial reaction. Accordingly, the battery can function as a magnesium battery with a reduced polarization resistance and can realize hydrolysis.

In addition, in this case of batteries which are not hermetically sealed, a nonwoven fabric and the like having a capillary function and a gel body may be used in combination and contained in the electrolysis solution in addition to the polymer solid electrolyte from necessity to impart the electrolyte with a function of shielding hydrogen gas outflow, thereby enabling to send hydrogen gas to a hydrogen demanding unit without allowing the hydrogen gas generated in the hydrogen generating container to flow out of the open area of the positive electrode to the outside and to prevent explosion of the container as well. This can be applied to the field of small-sized batteries for portable devices such as a tabular battery and a button battery.

In the meantime, when a hermetically sealed battery is to be formed, a battery element may be constructed so that active material such as a metal such as Ni and Ti, an alloy, a powder of a metal compound and a catalyst, which are capable of accepting respective ions of hydrogen and magnesium, are mixed and contained in the positive electrode, thereby enabling to accept a plural number of ions including a polyvalent ion by the battery element with an enlarged unit area and capable of accelerating interfacial reactions and to function as a battery with a reduced polarization resistance and serving as hydrolysis.

In addition, for example, ionization of magnesium (Mg) of the negative electrode may be increased or decreased by applying the electric power generated in the battery element of the container to a load device so that the amount of electric current which passes through the load device is changed, thereby enabling the amount of metal crystals changing to magnesium hydroxide from the surface of magnesium (Mg) to be proportional thereto. At this time, hydrogen atoms lose the settled site among crystals of Mg metal and each two of the atoms bind together to be a hydrogen molecule and thus hydrogen gas is generated. This produced amount depends on the reaction by the electric current through the load, and thus the generation of hydrogen gas can be also controlled by the electric current.

Besides, control of the hydrogen generation can be facilitated even in the field of fuel cell-powered automobiles where a hydrogen demanding device with a high voltage and with large variations in the hydrogen consumption is used by stacking the container or the cells of the battery element to construct a battery.

In addition, utilizing such a battery structure, particles and a powder of magnesium (Mg) may be mounted on the negative electrode to produce a container and thereby it can be used as a large-capacity primary battery by performing charging first to hydrogenate magnesium (Mg) of the negative electrode.

Furthermore, when the container is to be constructed as a secondary battery (charge/discharge) which uses oxygen (O) as an active material, magnesium (Mg) powder is coated with a metal or a plastic polymer and attached to the positive electrode as a solid, and an alkaline aqueous solution or a nonaqueous solution is used as an electrolysis solution and a functional material formed by mixing a metal such as Ni and Ti, an alloy, a powder of a metal compound and a catalyst in a fluorine resin is attached to the diffusion layer to the positive electrode for accepting respective ions of hydrogen and magnesium and for avoiding polarization resistance, and thereby enabling to perform charge/discharge.

In the case of this battery constitution, since the positive electrode uses atmospheric oxygen as an active material, the amount of electricity dischargeable on the positive electrode side is not limited and electric capacity can be increased drastically and both of electricity and hydrogen can be used and supplied for charge.

In addition, when a metal oxide or a functional material of an oxide of a transition metal such as lithium cobaltate (LiCoO₂), lithium nickelate (LiNiO₂) and lithium manganate (LiMn₂O₄) in addition to oxygen, thionyl chloride and nickel hydroxide is used as an active material of the positive electrode, and an electrolyte and various materials are used as the functional material of the negative electrode and a battery element is constructed in a container, and thereby a composite battery avoiding polarization resistance by a plural number of ions (such as hydrogen ion, metal ions and lithium ion) can be formed.

In addition, when a battery element is not provided in the inside of the container, a reaction chamber can be provided at the lower part. For example, when a functional material of magnesium (Mg) or magnesium hydride (MgH₂) of various forms such as plate-like lumps or debris, a powder or a solidified powder is attached to the inside and a liquid chamber is provided at the upper part and an aqueous solution (electrolysis solution) is put therein to construct a battery, the aqueous solution (electrolysis solution) is pushed up (made to flow out) by the pressure of hydrogen gas which is generated using a siphon phenomenon, and consumption of the generated hydrogen gas in the hydrogen demanding unit decreases the pressure and allows the liquid to fall down (flow in), and thereby enabling to automatically control the hydrolysis reaction between the aqueous solution (electrolysis solution) and the functional material.

### [BRIEF DESCRIPTION OF THE DRAWINGS]

FIG. 1 is a schematic overall view of an embodiment according to the present invention;
Fig. 2 is a cross-sectional view of the whole of and a part of an apparatus, in an embodiment according to the present invention, with a small-size hydrogen generating container mounted thereon;
FIG. 3 is a cross-sectional view of the whole and a part of a medium- to large-size hydrogen generating container in an embodiment according to the present invention; and
Fig. 4 is a cross-sectional view of the whole of a hydrogen generating container not provided with a battery element in an embodiment according to the present invention.

### [BEST MODE FOR CARRYING OUT THE INVENTION]

The present invention will be described in more detail with reference to the accompanying drawings.

### Example 1

The step of reducing the particle size of a functional material, the step of hydrogenating the functional material, the step of forming a film, and the step of mounting the functional material will be described.

When the functional material is a hydrogen storage alloy, for example, calcium (Ca), lanthanum (La), magnesium (Mg), nickel (Ni), titanium (Ti), and third elements, for example, vanadium (V), are generally known as materials for the hydrogen storage alloy. These materials are mixed together, and the mixture is melted to produce cast hydrogen storage alloys such as La-Ni-base alloys and Mg-Ti-base alloys. Hydrogen is occluded in these alloys, followed by initial pulverization or mechanical pulverization to produce a fine powder of a hydrogen storage material. An alternative method for producing a fine powder of a functional material is as follows. Particles of a metal or an alloy or particles of Mg are placed as a functional material in a pressure-resistant container. High-pressure hydrogen is introduced into the pressure-resistant container, and one end of the functional material is ignited by heating the functional material at a high temperature to cause combustion synthesis by utilizing self-heat generation as a result of a hydrogenation reaction, whereby a nanometer-size fine powder of, for example, Mg-Ni-Fe-base alloys, Ti-Cr-V-base alloys, Mg-Ca-Ni-base alloys, or crystals of metal hydrides containing metal such as Al and Mg are produced. In a further method, a nonequilibrium (amorphous) fine powder is produced by heating a material at a high temperature by laser beam irradiation to gasify the material and cooling the gasified material.

A functional material may also be produced from a hydrogen adsorption material and a hydrogen storage alloy, for example, by mixing a powder of a carbon material having a graphite structure or amorphous structure with one type or a plurality of types of hydrogen storage alloys or carbides or oxides and mechanically pulverizing using an inert gas or the like to produce a nanometer-size fine powder of a functional material. Commonly known catalytic materials can also be similarly produced.

When the average particle size of the fine powder of the functional material thus produced is 20 nm, the specific surface area is about 45 m²/g. Since the specific surface area of a powder having a particle diameter of 0.5 µm is about 1 m²/g, in the nanometer-size fine powder, the surface area per unit mass is significantly increased. Accordingly, in the nanometer-size fine powder, hydrogen occlusion, adsorption function of hydrogen and methane as well as catalytic functions such as deodorization and decomposition are improved, and the reaction time per unit weight can be shortened in the hydrolysis and the like.

Materials for the functional material include halogens such as iodine or compounds thereof; oxygen family elements such as sulfur and selenium or alloys, or compounds thereof; nitrogen family elements such as arsenic, antimony and bismuth, or alloys or compounds thereof; carbon family elements such as carbon, silicon and tin, or alloys or compounds thereof; alkali metal elements such as lithium, sodium, potassium, or alloys or compounds thereof; alkaline earth metal elements such as beryllium, magnesium or calcium, or alloys or compounds thereof; zinc, cadmium, mercurial zinc or cadmium or elemental mercury, or alloys or compounds thereof; boron family elements such as boron, aluminum, gallium or alloys, or compounds thereof; transition elements, for example, transition elements in the fourth period of the periodic table such as titanium, chromium, manganese, iron and nickel, transition elements in the fifth period of the periodic table such as zirconium, ruthenium and palladium, transition elements in the sixth period of the periodic table such as lantern, tantalum and platinum, transition elements in the seventh period of the periodic table such as thorium, and the alloys or the compounds of these transition elements. One type or a plurality of types of these materials are selected as needed and used as the functional material.

The functional material in the form of a nanometer-size fine powder thus produced is subjected to a film coating step.

Emulsion-type water-soluble polymer resins dispersed in water are used as a film forming material. Such resins include low-temperature thermoplastic aliphatic polyesters (for example, Terramac manufactured by Unitika, Ltd.) or polyolefins (for example, Arrowbase manufactured by Unitika, Ltd.) as well as ethylene tetrafluorides. The film forming material is diluted with water and is kneaded with the fine powder of the functional material. The film forming material is then heated and dried at 110°C to 150°C to cause glass transition and thus to form a film having a thickness of 1 to 5 µm.

When the reaction with water in the film forming step causes damage to the functional material, the following method may also be adopted. When the resin is a plastic organic solvent soluble polymer agent, the resin is dissolved in an organic solvent. The solution is kneaded with the powder of the functional material, and the kneaded product is dried followed by pulverization to produce particles. On the other hand, when the resin is a water soluble polymer agent, a solution of the polymer agent is dried, and the dried polymer is then pulverized. The powder in an amount necessary for forming a film having a thickness of 1 to 5 µm after crystallization around the particles of the functional material is mixed with the fine powder of the functional material. The mixture is then heat treated at 110°C to 150°C, for example, with an electrothermal pressure bonding roller to cause glass transition of the film forming material and thus to form a film by crystallization.

The functional material thus produced is kneaded with a binder to form a paste. The paste is coated on the inner side of a contemplated apparatus or on the inner side or outer side of a pipe within the apparatus, on the inside of grooves of a corrugated plate, or on electrodes. The coating is then dried and heated for solidification and bonding of the coating. If necessary, a water soluble or organic solvent soluble plastic polymer resin diluted with a solvent may be coated on the solidified surface to perform film forming.

Binders usable herein include conventional polymer resins, for example, fluororresins such as polytetrafluoroethylenes (PTFEs), polychlorotrifluoroethylenes (PCTFEs), and polyvinylidene fluorides (PVDFs), styrene-butadiene rubbers and carboxycellulose.

Regarding a storing unit for the functional material, a method may be adopted in which, for example, a powder of magnesium or magnesium hydride, or a mixture of the powder with a dried powder of an aliphatic polyester resin or the like, which is heated to cause glass transition followed by pulverization to produce particles having any desired diameter, together with an inert gas, is filled, hermetically sealed and stored in a waterproofed container or a bag..

### Example 2

Experimentation of hydrolysis and generation of electricity using magnesium (Mg) or magnesium hydride (MgH2) as a functional material will be described.

Experiments of a fastest self-propelled reaction of hydrolysis with aqueous solutions of naturally existing solutes were attempted. In the experiments, two types of samples were used. Sample 1: 1 g of magnesium (Mg) having a particle size of not less than 200 µm. Sample 2: 1 g of magnesium hydride (MgH₂) having a particle size of not more than 50 µm.

Three types of aqueous solutions were used as the aqueous solution. Aqueous solution 1: water (H₂O). Aqueous solution 2: an 8% aqueous citric acid (C₆H₈O₇) solution. Aqueous solution 3: a 5% aqueous bittern (magnesium chloride hexahydrate MgCl₂·6H₂O) solution.

The experiment was started by pouring each 5 cc of the three types of aqueous solutions at room temperature (20°C) to the samples in test tubes. When the self-propelled reaction rate is low, observation and measurement were performed while heating the aqueous solutions gradually.

For sample 1, in aqueous solution 1: water (H₂O), no reaction occurred, and, upon heating to 90°C, a small amount of bubbles were observed on the particle surface. On the other hand, in solution 2: an 8% aqueous citric acid (C₆H₈O₇) solution, the reaction occurred vigorously, and the reaction caused a temperature rise and was completed in less than two min. In aqueous solution 3: bittern (magnesium chloride hexahydrate MgCl₂·6H₂O), the reaction proceeded slowly, and, upon heating, the reaction was accelerated, and floating of bubbles was observed at 90°C.

For sample 2, in aqueous solution 1: water (H₂O), bubbles were observed, and, upon heating to 90°C, floating of bubbles was observed. In aqueous solution 2: an 8% aqueous citric acid (C₆H₈O₇) solution, the reaction occurred vigorously, and the reaction caused a temperature rise and was completed in less than 1.5 min. In aqueous solution 3: bittern (magnesium chloride hexahydrate MgCl₂·6H₂O), the reaction proceeded fast, and the temperature was elevated by self-heat generation over time. Significant floating of bubbles was observed upon heating to 90°C.

The final amount of a hydrogen gas collected was similar for each aqueous solution: sample 1: 800 cc (magnesium weight ratio: 8% by weight), and sample 2: 1400 cc (magnesium weight ratio: 14% by weight).

Subsequently, an electricity generation experiment was attempted for a battery element using air (oxygen) as the active material for the positive electrode and magnesium hydride (MgH₂) for the negative electrode. A commercial magnesium battery was disassembled, and magnesium mounted on the negative electrode was removed. A magnesium hydride powder and a water-soluble plastic polymer agent were admixed with an organic solvent. A frame having a size of an electrode was connected, and heating was carried out while compressing to bond the mixture as a solid to the electrode foil.

A separator, a positive electrode collector and other members were assembled using a single cell which was a member of a commercial product, and a 5% aqueous bittern (magnesium chloride hexahydrate MgCl₂·6H₂O) solution was used as an electrolysis solution. The positive electrode collector of a commercial product is formed in the shape of a net by coating an activated carbon powder or graphite and a catalyst admixed with a fluorine resin on a copper foil followed by firing.

The reaction formula of the experiment and the measured value of the electromotive voltage are as follows:

Reaction formula at the positive electrode: 2Mg → 2Mg²⁺ + 4e⁻;

Reaction formula at the negative electrode: O₂ + 2H₂O +4 e⁻ → 4OH⁻;

Total reaction formula: 2Mg + O₂ + 2H₂O → 2Mg(OH)₂ ↓;

### Initial electromotive voltage is 2.7 V.

It has been found that a battery comparable with a lithium battery can be obtained by using magnesium in the negative electrode. The theoretical electromotive force of air and magnesium is 2.7 V but at the same time it gradually falls due to polarization resistance derived from a plurality of ions caused by the hydrolysis reaction (reaction formula: MgH₂ + 2H₂O → Mg²⁺ + 2OH⁻ + 2H₂↑).

In this experiment, the hydrolysis reaction was favored as a primary battery using an aqueous solution of a chloride compound as the electrolysis solution. However, when other functional material is used and the battery is used as a rechargeable battery, an alkaline electrolysis solution containing potassium hydroxide (KOH) and an organic solvent are preferably used as the electrolysis solution.

The measured amount of the generated hydrogen gas was about 650 cc/g (magnesium weight ratio: 6% by weight). The amount of electricity is proportional to the decreased amount of magnesium. A graph of the decreased amount of magnesium against the amount of electricity and a graph of the electric current against the area of the negative electrode are shown in Table 1. The numeral values in the graphs were calculated based on the measurement results using the Faraday's law.

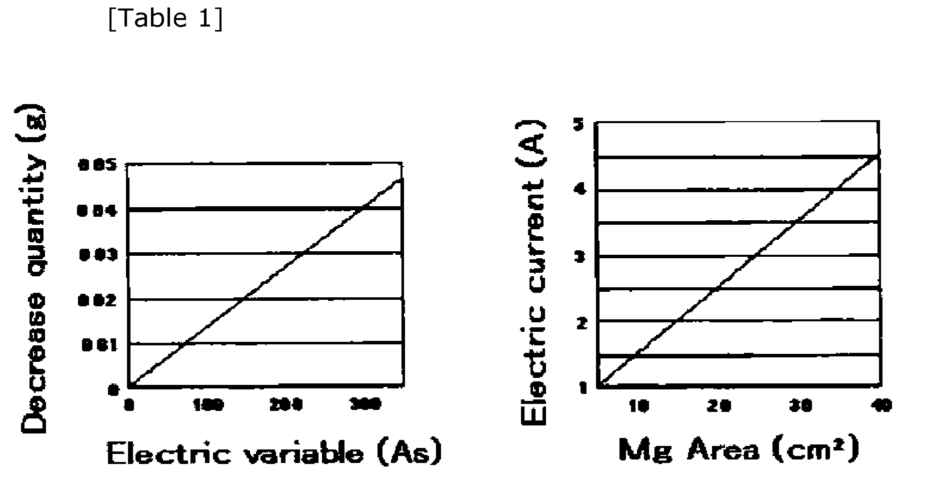

According to the Faraday's law, the theoretical amount of electricity Q (unit: C or As) can be calculated by Q = Fmn/M. Here, F is Faraday constant; m is the mass of the active material; M is the formula weight of the active material; and n is the number of electrons participating in the reaction, and the amount of electricity is proportional to the mass of the active material.

### Example 3

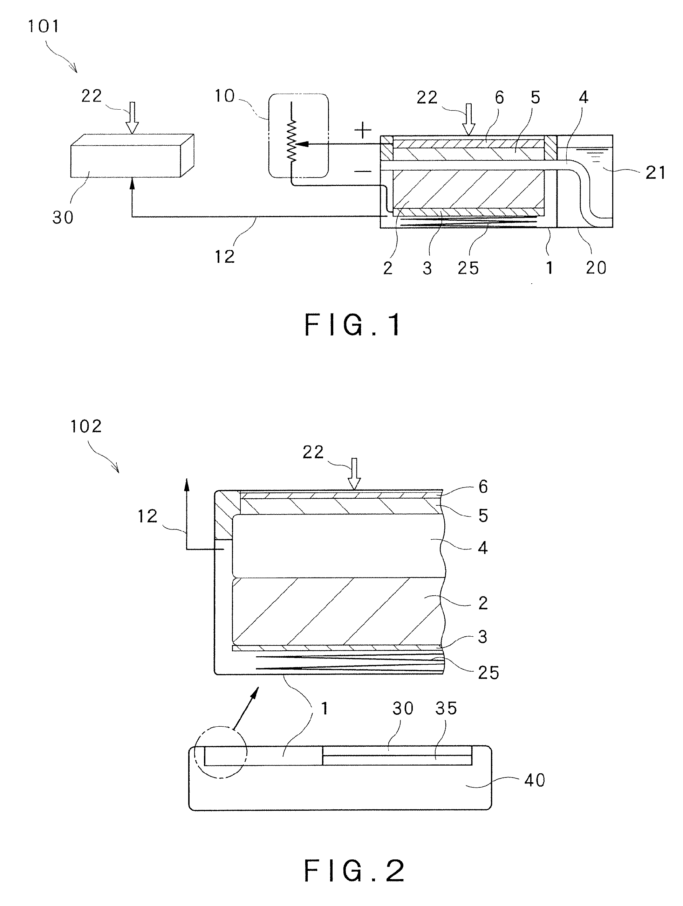

Embodiments of the present invention will be described with reference to Figs. 1, 2 and 3. In Fig. 1, a positive electrode 6, a separator 4, and a negative electrode 3 with a functional material 2 mounted thereon are laminated to constitute a battery element and are provided within a hydrogen generating container 1. A lead wire from the electrode and a load device 10 are connected through an electric wire to pass an electric current, while the container 1 is connected and communicated with a hydrogen demanding unit 30 through a hydrogen pipe 12 to constitute the whole apparatus 101 of the present invention.

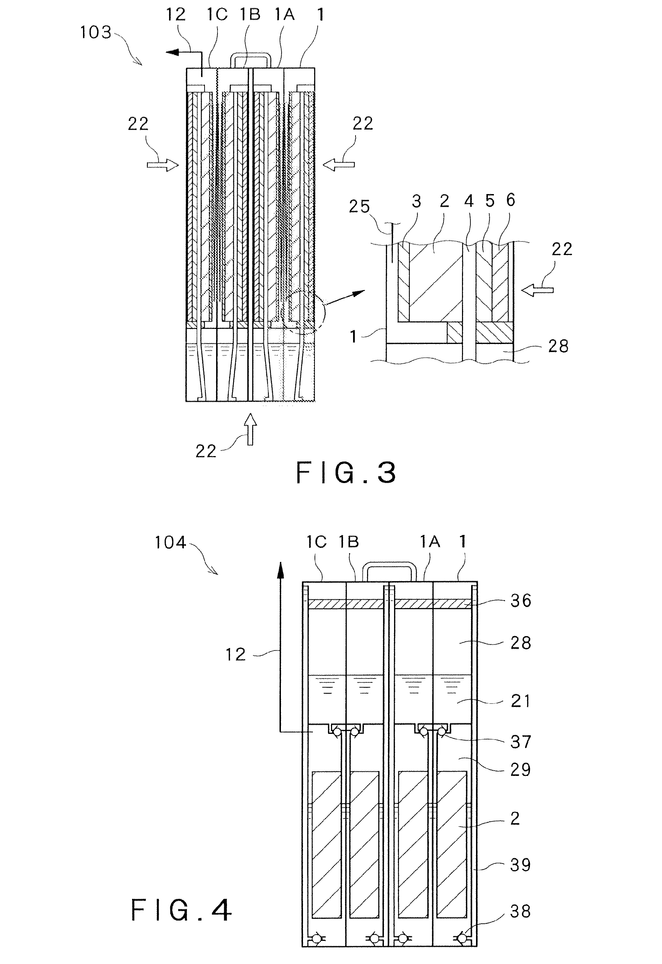

Fig. 2 shows an embodiment 102 that is a power supply unit which, in use, is usually carried. In this embodiment 102, a hydrogen generating container 1 is incorporated in a portable (cellular) phone 40. Fig. 3 shows an embodiment 103 which is a middle- to large-size apparatus in which the hydrogen generating containers 1 are stacked.

When the hydrogen generating container 1 is an open primary battery or rechargeable battery using oxygen as an active material, the positive electrode 6 is formed in the shape of a net by providing a mixture of a metal or an alloy such as Ni and MgTi, a powder of a metal oxide, an activated carbon powder or graphite with a fluorine resin as a functional material for a diffusion layer 5, coating the mixture onto the inner side of a copper foil and firing the coating, and connecting a lead wire to the electrode foil. On the other hand, when the hydrogen generating container 1 is a hermetically sealed rechargeable battery using oxygen as an active material, the positive electrode 6 is formed by dispersing, through mixing, a metal or an alloy such as Ni and MgTi and a powder of a metal oxide in a precursor solution as a functional material for a diffusion layer 5, coating the dispersion on the inner side of a copper foil, firing the coating, and connecting a lead wire to the electrode foil.

The separator 4 is formed of a solid polymer electrolyte film or glass fiber or a nonwoven fabric mixed with an acrylic resin or a gel material such as *natto* (fermented soybean) resin which is synthesized by irradiating polyglutaminic acid, the ingredient of the *natto* thread, with a radiation. The separator 4 extends from the battery element part into a liquid container 20 from the viewpoints of improving the power generation function and siphoning water or an aqueous solution (an electrolysis solution) 21 to supplement enough water.

When the hydrogen generating container 1 has a hermetically sealed structure, in the separator 4, the use of a gel material is not particularly required. However, when a liquid container cannot be provided as in the separator 4 in FIG. 2 or when the positive electrode side of a container is open, a nonwoven fabric or the like and a gel material soaked with an electrolysis solution are used.

A functional material 2 is bonded on the inner side of the negative electrode 3, and a spring 25 is placed between the outer side of the negative electrode 3 and the container so that the battery elements are intimately contacted with the negative electrode 3 to realize enhanced reaction and electroconductivity. A lead wire is connected to the electrode foil.

When the hydrogen generating container 1 has a hydrolysis function or a primary battery function, the functional material 2 mounted on the inner side of the negative electrode 3 is a solidified product of plate-like lumps or debris of magnesium (Mg) or coarse particles of magnesium hydride (MgH₂). On the other hand, when the hydrogen generating container 1 has a rechargeable battery function, the functional material 2 is formed by mixing powder particles of magnesium (Mg) coated with a plastic polymer or a metal and a binder together and molding the mixture. The functional material 2 is connected to an electrode foil having a lead wire.

The materials and the form of the battery elements are not particularly limited, and commonly known materials and forms can be adopted. When the powder of the functional material is film coated or bonded with a plastic polymer agent, damage to the coating film can be self-repaired and scattering thereof can be prevented. Accordingly, the durability can be improved. Likewise, the adoption of this technique, for example, in alkali button batteries, nickel cadmium batteries, nickel metal hydride batteries, lithium ion batteries, and lead storage batteries can contribute to improved durability and other properties.

In the liquid container 20, water or an aqueous bittern (magnesium chloride hexahydrate MgCl₂·6H₂O) solution is used as an aqueous solution (an electrolysis solution) 21. However, conventional electrolysis solutions such as potassium hydroxide (KOH), sodium hydroxide (NaOH), and nonaqueous solutions are selected and introduced into the liquid container 20 according to the construction and purpose of the battery depending on the functional material of the battery element.

A connecting unit, which gathers a wiring socket to the load device 10 and a control unit and a hydrogen gas pipe socket to a hydrogen demanding unit 30 and, further, a sealed liquid sending port for sending water or an aqueous solution (an electrolysis solution) from the liquid container 20 to the separator 4 is also provided on the outer side of the hydrogen generating container 1, although the connecting unit is not shown in the drawing. Accordingly, the hydrogen generating container 1 is constructed detachably.
The hydrogen demanding unit 30 is an apparatus using a hydrogen gas, for example, a fuel battery cell in batteries, a hydrogen fueled engine and a hydrogen jet engine in hydrogen engines, a hydrogen burner in welding/cutting, a hydrogen pump in hydrogen stations. The hydrogen generating container and a contemplated hydrogen demanding unit are integrated with each other by connection and communication through a hydrogen pipe, and a hydrogen gas is supplied into the hydrogen demanding unit 30 without stay of the hydrogen gas within the hydrogen generating container 1.

In addition, when single cells composed of the battery elements or the hydrogen generating containers 1 are stacked to constitute an apparatus, the apparatus can more easily be utilized in the field of applications such as fuel cell-powered automobiles in which high voltage is required and the hydrogen consumption varies at random.

In a middle- to large-size apparatus, air 22 is blown into the container with a blower pump to enhance a reaction at the positive electrode and to increase the external pressure, whereby the leakage of hydrogen from the inside of the container can be prevented.

A series of operation of the hydrogen generating container 1 having the above construction will be described. In a primary battery, when the switch of the load device 10 is turned on, electrons leave the active material in the hydrogen generating container 1, are passed through the load device 10 and reach, as an electric current, the positive electrode 6 through a conducting wire. At the same time, the active material in the negative electrode 3 is oxidized, ionized and eluted into the electrolysis solution, and the ions are passed through the separator 4 and reach the positive electrode 6. In the diffusion layer 5 of the positive electrode 6, the active material, for example, nickel hydroxide is reacted with the electrons which have arrived. Simultaneously with this reaction, when the negative electrode 3 is a hydrogenated functional material, the functional material is oxidized and ionized from the surface side to cause a change in quality and consumption of the functional material, and hydrogen atoms, which settle among crystals, lose the settled site. As a result, two hydrogen atoms are bound to each other to form a hydrogen molecule, whereby a hydrogen gas is produced. A part of the hydrogen gas is dissolved in the electrolysis solution, is ionized, is passed through the separator 4, and reaches the positive electrode 6. In the diffusion layer 5 of the positive electrode 6, oxygen (O) in air 22 as an active material or other active material reacts with the electrons which have reached the positive electrode 6. The remaining hydrogen gas is consumed by supply into the hydrogen demanding unit 30 through the hydrogen pipe 12.

Further, in the load device 10, when the load resistance is decreased, the amount of the electric current increases and the generated amount of hydrogen gas also increases. When the switch is turned off, the generation of hydrogen gas is minimized.

In the case of a hermetically sealed rechargeable battery in which the functional material of the positive electrode 6 is formed of a metal or an alloy such as Ni, MgTi and a powder of a metal oxide, discharging proceeds as follows. When the switch of the load device 10 is turned on, for example, occluded hydrogen atoms are eluted from the functional material in the negative electrode 3 in the hydrogen generating container 1 into the hydrolysis solution, are ionized, are passed through the separator 4, and reach the diffusion layer 5 of the positive electrode 6. At the same time, electrons are passed through the load device 10 and reach, as current, the positive electrode 6, and the hydrogen ion is reacted with oxygen (O) in the oxide, nickel hydroxide, and the electrons which have reached the positive electrode 6.

On the other hand, in charging, a hydrogen gas is dissolved in the electrolysis solution through a hydrogen permeable membrane and is occluded in the active material of the negative electrode. In another method, an external power supply is connected to both electrodes, and the electrodes are energized to perform hydrolysis of water to generate hydrogen which is then occluded in the active material of the negative electrode 3.

The structure of the hydrogen generating container having such battery elements is convenient because the polarization resistance decreases. In addition to the above advantage, the structure of the hydrogen generating container is further advantageous in that the start and control can be performed using an external power supply and, further, the production and reduction of materials can also be performed using various electrolytes and ionic reactions.

### Example 4

An embodiment 104 will be described with reference to Fig. 4. A hydrogen generating container 1 includes a reaction chamber 29 in the lower part of the container 1. A functional material 2 in various forms of plate-like lumps, debris, powders, or solidified powders, or a hydrogenated functional material 2 is mounted on the reaction chamber 29. A liquid chamber 28 is provided in the upper part of the container 1, and an aqueous solution (an electrolysis solution) 21 is placed in the liquid chamber 28.

A check valve 37 is provided in a communication pipe provided in a partition wall between the liquid chamber 28 and the reaction chamber 29 within the hydrogen generating container 1. A check valve 38 is provided in a communication pipe between the bottom of the reaction chamber 29 and the upper part of the liquid chamber 28. A hydrogen pipe 12 connected to and communicated with the hydrogen demanding unit 30 is provided in the of the reaction chamber 29. A plurality of the same hydrogen generating containers 1 are connected to each other in parallel.

When the functional material 2 is magnesium (Mg) or magnesium hydride ((MgH₂), any harmful substance is not produced by using magnesium chloride (MgCl) in the aqueous solution (electrolysis solution) 21. In this case, a conventional aqueous solution (an electrolysis solution) may also be selected and used.

The hydrogenated functional material generates a large amount of hydrogen gas from both the hydrolysis and the hydrides. Accordingly, the amount of water generated, condensed as dew and collected in the hydrogen demanding unit is large enough to ensure the amount of water necessary for the hydrolysis even when the amount of water reduced by diffusion into the air is taken into consideration. Accordingly, the circulation of the generated water again into the liquid container can eliminate the need to supplement water from the outside.

When the hydrogen generating container is constructed in this way, a series of operations are performed as follows. An aqueous solution (an electrolysis solution) 21 is pushed up (flows out) by the pressure of the generated hydrogen gas to stop the reaction by taking advantage of a siphon phenomenon. Upon the consumption of the generated hydrogen gas by the hydrogen demanding unit 30, the pressure is lowered to allow the aqueous solution (electrolysis solution) 21 to fall down (flow in) to start a hydrolysis reaction of the aqueous solution (electrolysis solution) 21 and the functional material 2. Thus, automatic control can be realized without use of any electronic control unit.

The present invention has been described but the present invention is not limited to the above-described embodiments and can be modified or altered within the concept of the present invention.

### [INDUSTRIAL APPLICABILITY]

As described above, the present invention can realize high functionality, weight reduction, cost saving and so on. Further, storage and transportation of safe natural energy can be realized using naturally occurring and inexhaustible materials which are harmless to the human body. The present invention can provide an energy source of the next generation which can realize complete zero-emission cycle without depletion of resources and contributes to the prevention of global warming.

## Claims

1. A power generating apparatus comprising:
a hydrogen releasing unit in a hydrogen generating container form comprising a functional material mounted within a container, or comprising a functional material mounted on a negative electrode and a positive electrode and a battery element formed of an electrolyte provided within the container;
a hydrogen generating unit comprising a liquid container for generating a hydrogen gas both by hydrolysis through which the functional material is reacted with water or an aqueous solution (an electrolysis solution) and by binding of hydrogen atoms which settle among crystals due to a change in properties of the functional material by the hydrolysis;
a first electrogenic unit for allowing the battery element in the hydrogen generating container to generate electricity;
a second electrogenic unit for allowing a hydrogen demanding unit to generate electricity by utilizing the hydrogen gas generated in the hydrogen generating container; and
a control unit for applying the electric power generated in the first electrogenic unit to a load device to control the amount of the hydrogen gas generated by the hydrogen generating unit according to the amount of current regulated by a load from the load device.

2. The hydrogen generating container according to claim 1, wherein the functional material is lumps, debris, or powders of one type of or a plurality of types of materials (1) to (4):
(1) a carbon faily element such as silicon (Si), or a compound containing a hydride of the carbon family element,
(2) an alkali metal element such as lithium (Li), an alloy of the alkali metal emement, or a compound containing a hydride of the alkali metal elemant,
(3) an alkaline earth element such as magnesium (Mg) and calcium (Ca), an alloy of the alkaline earth element, or a compound containing a hydride of the alkaline earth element, and
(4) a boron family element such as aluminum (Al) and boron (B), an alloy of the boron family element, or a compound containing a hydride of the boron family element.

3. The functional material according to any of claims 1 and 2, wherein the functional material is a powder, a powder which has been covered with a plastic polymer film or a metal film and has been solidified, or a material which has been coated from its surface or its solidified surface with a plastic polymer followed by conversion of the coating to a film, and is used in any of the following applications:
(1) a catalyst to be used in molded products, coating materials, impregnating agents or the like,
(2) a material, which dissolves hydrogen in a liquid, to be mixed into drugs, foods or the like,
(3) an energy storage material to be stored in waterproofed and hermetically sealed containers, bags or the like,
(4) a gas detecting material to be used in a detecting part or the like,
(5) a material to be used, within apparatuses or the like, in purification or storage (adsorption/occlusion) of a specific substance or in heat pumps or hydrogen pressurization, and
(6) a material to be used in electrodes or diffusion layers in chemical apparatuses including a battery.

4. The hydrogen generating container according to any of claims 1, 2 and 3, wherein the hydrogen generating container is a composite battery including a battery element constructed, within the container, with a positive electrode using any one of or more types of active materials of thionyl chloride, nickel hydroxide, metal oxides, transition metal oxides and the like in addition to oxygen, an electrolyte, and a negative electrode.

5. The hydrogen generating container according to any of claims 1, 2, 3 and 4, wherein the hydrogen generating container is an open container in which, on the positive electrode side, the diffusion layer is in a net form formed, for example, by coating, on a copper foil, a functional material formed of a mixture of a powder of a metal, an alloy, a metal compound or the like and an activated carbon powder or graphite with a fluororesin and then firing the coating.

6. The hydrogen generating container according to any of claims 1, 2, 3, 4 and 5, wherein the hydrogen generating container is a hermetically sealed container in which, on the positive electrode side, a functional material formed of a mixture of a powder of a metal, an alloy, a metal compound or the like is mounted to form the diffusion layer.

7. The hydrogen generating container according to any of claims 1, 2, 3, 4, 5 and 6, wherein the electrolysis solution contains any one type of or a plurality of types of materials (1) to (5):
(1) water,
(2) an organic solvent,
(3) bittern (MgCl),
(4) a chloride, and
(5) an aqueous solution of an acid or alkali or an organic solution.

8. The hydrogen generating container according to any of claims 1, 2, 3, 4, 5, 6 and 7, **characterized by** comprising a separator comprising a solid polymer electrolyte and the like, fibers having a capillary function in combination with a gel.

9. The hydrogen generating container according to any of claims 1, 2, 3, 4, 5, 6, 7 and 8, wherein the container is a magnesium battery comprising a negative electrode on which magnesium (Mg) in a solidified form of plate-like lumps, debris, or particles, or an active material in a solidified form of a powder of magnesium hydride (MgH₂) has been mounted.

10. The hydrogen generating container according to any of claims 1, 2, 3, 4, 5, 6, 7, 8 and 9, wherein air is blown into the positive electrode side with a blower pump.

11. The hydrogen generating container according to any of claims 1, 2, 3, 4, 5, 6, 7, 8, 9 and 10, wherein charging is performed with an external electric power or hydrogen gas.

12. The hydrogen generating container according to any of claims 1, 2, 3, 4, 5, 6, 7, 8, 9, 10 and 11, wherein the hydrogen generating container includes a detachable liquid container for water or an aqueous solution (an electrolysis solution).

13. The hydrogen generating container according to any of claims 1, 2, 3, 4, 5, 6, 7, 8, 9, 10, 11 and 12, wherein the hydrogen generating container or a cell body of the battery element is used singly or in a stack form.

14. The hydrogen generating container according to any of claims 1, 2, 3, 4, 5, 6, 7, 8, 9, 10, 11, 12 and 13, wherein an external supply starts or controls the electrode in the battery element, or causes the production or reduction of a substance in the electrode.

15. The power generating apparatus according to claim 1, wherein the hydrogen demanding unit is an apparatus using a hydrogen gas, for example, a fuel battery cell in batteries, a hydrogen fueled engine and a hydrogen jet engine in hydrogen engines, a hydrogen burner in welding/cutting, a hydrogen pump in hydrogen stations, and the hydrogen generating container and a contemplated hydrogen demanding apparatus are integrated with each other by connection and communication through a hydrogen pipe.

16. The power generating apparatus according to any of claims 1 and 15, wherein the hydrogen gas generated in the hydrogen generating container is supplied into a hydrogen demanding unit and is combined with oxygen to give water which is then reutilized by circulation to the liquid container.

17. The power generating apparatus according to any of claims 1, 15 and 16, wherein the electricity generated by the first electrogenic unit in the battery element is applied to the load device, and, based on the current amount, the amount of a hydrogen gas generated as a result of conversion of hydrogen atoms, which settle among crystals of the functional material due to a change in properties of the functional material as a result of ionization of the functional material in the negative electrode, to hydrogen molecules is controlled.

18. The power generating apparatus according to any of claims 1, 15, 16 and 17, **characterized by** comprising a liquid chamber and a reaction chamber between which a positional difference is provided to control a hydrolysis reaction between water or an aqueous solution (an electrolysis solution) in the reaction chamber and the functional material by taking advantage of a siphon phenomenon caused by a change in pressure of the generated hydrogen gas and the hydrogen gas consumed by the hydrogen demanding unit.

19. A method for hydrogenating a functional material according to any one of claims 1, 2, 3, 4, 5, 6, 7, 8, 9, 10, 11, 12, 13, 14, 15, 16, 17 and 18, wherein high-pressure hydrogen is introduced into a pressure-resistant container, and one end of the functional material is ignited by laser beam irradiation or the like to allow a hydrogenation reaction to automatically proceed by self-heat generation of a hydrogenation reaction and thus to provide a powder of a hydrogenated functional material.

20. A method for reducing a functional material according to any one of claims 1, 2, 3, 4, 5, 6, 7, 8, 9, 10, 11, 12, 13, 14, 15, 16, 17, 18 and 19, **characterized by** comprising placing a material of an alloy or a metal compound in a pressure-resistant container, introducing a hydrogen or inert gas or the like into the pressure-resistant container, heating the material at a high temperature by laser beam irradiation or the like, and cooling the gasified material to reduce the functional material.
